# EUROPÄISCHE PATENTSCHRIFT

(11) **EP 3 408 991 B1**
(45) Veröffentlichungstag und Bekanntmachung des Hinweises auf die Patenterteilung: **23.09.2020**
(21) Anmeldenummer: 17703066.5
(22) Anmeldetag: 26.01.2017
(51) Int. Cl.: H04L 29/06

(54) **VERFAHREN ZUM AUSFÜHREN EINER ANRUFSTEUERUNG EINES CLIENTS AUF EINEN EINEN BENUTZER REPRÄSENTIERENDEN TELEFONIE-ENDPUNKT SOWIE EINEN HIERFÜR AUSGEBILDETEN PORTHANDLER**
METHOD FOR IMPLEMENTING A CALL CONTROL OF A CLIENT ON A TELEPHONY ENDPOINT REPRESENTING A USER, AND PORT HANDLER DESIGNED THEREFOR
PROCÉDÉ POUR EFFECTUER UNE COMMANDE D'APPEL D'UN CLIENT À UN TERMINAL DE TÉLÉPHONIE REPRÉSENTANT UN UTILISATEUR ET GESTIONNAIRE D'ACCÈS DÉDIÉ

(30) Priorität: 27.01.2016 DE 102016000870
(43) Veröffentlichungstag der Anmeldung: 05.12.2018
(73) Patentinhaber: Unify GmbH & Co. KG, 81739 München (DE)
(72) Erfinder: RIST, Claus, 44797 Bochum (DE); SCHÖNFELD, Norbert, 44309 Dortmund (DE)
(74) Vertreter: Fritzsche, Thomas
(86) Internationale Anmeldenummer: PCT/EP2017/051695
(87) Internationale Veröffentlichungsnummer: WO 2017/129707

(56) Entgegenhaltungen:
- EP-A1- 2 479 969
- US-A1- 2003 016 811
- US-A1- 2007 121 602

## Beschreibung

Die vorliegende Erfindung betrifft ein Verfahren zum Ausführen einer Anrufsteuerung eines Clients auf einen einen Benutzer repräsentierenden Telefonie-Endpunkt sowie ein Computerprogrammprodukt zur Implementierung des Verfahrens, einen maschinenlesbaren Datenträger mit darauf gespeichertem Computerprogrammprodukt sowie einen entsprechend hierfür ausgebildeten Porthandler.

Für die folgende Beschreibung seien folgende Begriffe kurz erläutert:
Eine Telekommunikationsplattform (kurz auch TK-Plattform) ist beispielsweise eine Vermittlungsstelle oder eine Telekommunikationsanlage (auch als PBX bzw. "Private Branch Exchange" bezeichnet). Solche TK-Plattformen bieten meist SIP-basierte VolP/Videoover-IP-Technologien an. Ein Telefonie-Endpunkt ist beispielsweise ein Telefon, Smartphone, ein Computer zur Nutzung beim Aufbau oder Betrieb einer Telefonverbindung bzw. "Call" oder einer Datenverbindung, oder ein anderes - ggf. virtuelles - Endgerät.

Ein Cloud-Kommunikationsserver (CKS) ist beispielsweise eine SaaS-Cloud-Plattform für die teamübergreifende Zusammenarbeit. Hier erhalten Teams, was sie für eine effektive Kommunikation benötigen, in einem einzigen Client (kurz auch CKS-Client).

Ein CKS-Client ist beispielsweise eine Anwendungssoftware (App), mit der u.a. Sprache, Video, Screensharing, Messaging, Chat und Dateifreigabe vereint werden und ermöglicht somit eine problemlose und vereinfachte Zusammenarbeit. Ein derartiger CKS-Client eines Cloud-Kommunikationsservers ist meist auf Basis der WebRTC-Technologie realisiert und kann beispielsweise auf einem (Telefonie-)Endpunkt installiert sein.

Ferner seien die folgenden Abkürzungen erläutert:
- ATC:: Advanced Telephony Connector
- App:: Anwendungssoftware, Applikation Software, Webanwendung
- CKS:: Cloud-Kommunikationsserver
- CSTA:: Computer Supported Telecommunications Applications (ECMA)
- CTI:: Computer Telephony Integration (z.B. CSTA, TAPI)
- GTC:: Generic Telephony Connector
- PBX:: Telekommunikationsanlage, Telekommunikationsplattform, Switch
- SaaS:: Software as a Service
- SIP:: Session Initiation Protocol
- TK:: Telekommunikation
- UTC:: Universal Telephony Connector
- VoIP:: Voice over IP
- WebRTC:: Web Real-Time Communication

US 2003/0016811 A1 beschreibt die Behandlung von extern eingehenden Anrufen als interne Anrufe durch einen switch, um Merkmale wie Weiterleitung, hunt groups etc. nutzen zu können. Dazu muss das Gerät, von dem der externe Anruf ausgeht, im switch registriert sein und eine besondere interne Rufnummer anwählen.

EP 2 47 9 969 A1 offenbart die Möglichkeit, mobile und drahtgebundene Netze und Systeme zu vereinen. Dazu wird ein physikalisches, mobiles Endgerät in virtuelle (abstrahierte) Sub-Endgeräte zerlegt, wobei jedes dieser Sub-Endgeräte genau eine Funktionalität aufweist: Sprachkommunikation, SMS, WiFi-SIP, Google Voice etc.. Nachdem das physikalische Endgerät in virtuelle Endgeräte abstrahiert wurde, werden auch die verwendeten Netze bzw. Dienste abstrahiert, indem die Nachrichten der diversen Dienste gezielt geroutet werden. Alle Nachrichten der abstrahierten Endgeräte eines physikalischen Endgerätes werden über den gleichen Netzzugang eines TK-Systems an das TK-System übertragen.

US 2007/0121602 A1 beschreibt ein Verfahren zur Regelung von VolP-Rufen mit einer online-Telefonanlage. die Übergabe eingehender Anrufe an verschiedene Mitglieder einer Liste von Benutzern. Falls keines dieser Mitglieder erreichbar ist, bestehen mehrere Möglichkeiten wie Abbruch des Anrufs, Halten, Voicemail etc. Die Behandlung eines eingehenden Anrufes erfolgt regelbasiert, wobei die Ziel-Rufnummer (die Durchwahlnummer) mit einer oder mehreren Regeln verknüpft ist.

Nachdem immer mehr Web-basierte Real-time-Kommunikationslösungen auf Basis der WebRTC-Technologie ausgerollt werden, steht die Integration mit den vorhandenen meist SIP-basierten VoIP/Video-over-IP-Plattformen an.

Dabei können dann auch SIP-basierte IP-Telefone als weitere Endpunkte bzw. Endgeräte eines TK-Plattform-Nutzers verwendet werden. Viele Hersteller von IP-basierten PBXen bzw. TK-Plattformen (sogenannte Converged Systems) und auch Soft-PBXen nutzen aber auch weitere Protokolle wie H.323 oder proprietäre Protokolle, die über Standardprotokolle getunnelt werden. Als Konnektivität zu öffentlichen Netzen hat sich der SIP-T (Trunking)-Standard durchgesetzt.

In der ersten Stufe der Integration geht es um die reine Konnektivität, das heißt Basic-Call-Fähigkeit ohne Leistungsmerkmale. Dazu wurde der SIP-Border-Proxy zur sicheren Anbindung anderer SIP-Domänen zu einem sogenannten Universal Telephony Adapter (UTC) erweitert. Der UTC realisiert neben dem Interworking zwischen WebRTC-Protokollen und SIP-T auch eine Adressumsetzung und registriert einen WebRTC-Client eines Cloud-Kommunikationsservers (CKS) beim SIP-Proxy/Registrar einer TK-Plattform (PBX). Da es sich um eine 1:1-Beziehung zwischen WebRTC-Client und SIP-Trunking-Endpunkt handelt, kann aufgrund der Rufnummer der SIP-Trunking-Endpunkt mit dem dahinterliegenden WebRTC-Client eine logische Teilnehmerassoziation erfolgen. Damit ist der WebRTC-Client vermittlungstechnisch in der PBX bzw. TK-Plattform integriert und funktioniert für abgehende und ankommende Rufe.

Dies ist dem Gebrauchsmuster DE 20 2011 003 225 U1 zu entnehmen. Hier werden innerhalb des Call Processing (auch als Anrufverarbeitung bezeichnet) alle weiteren Aktionen des externen Teilnehmers auf ein Teilnehmer-Device umgelenkt (assoziiert). Das verwendete Teilnehmer-Device ist ein sogenanntes virtuelles Device, d.h. ein Device ohne eine physikalische Anbindung. Die Anbindung an die Physik, d.h. den UTC repräsentierenden SIP-Trunk, erfolgt mittels Assoziierung. Dieser virtuelle Teilnehmer erbt somit die Eigenschaften des CKS-Clients und repräsentiert diesen gleichzeitig im Call Processing. Die Zuordnung WebRTC-Client (CKS-Client) eines Cloud-Kommunikationsservers (CKS)/UTC/SIP-Trunk/Virtueller Teilnehmer einer TK-Plattform (PBX) steht hierbei in einer "1 zu 1"- bzw. "1:1"-Beziehung.

Bei der Analyse der TK-Plattform-Use-Szenarien und -Use-Cases wurden einige vorteilhafte Leistungsmerkmale wie Halten, Rückfrage, Übergeben, Rufweiterleitung sowie Rufweiterschaltung insbesondere zwischen den Clients und den Endpunkten; etc. identifiziert. Zur Steuerung dieser Leistungsmerkmale wird der UTC zum Advanced Telephony Connector (ATC) erweitert. Zur Leistungsmerkmalsignalisierung kann beim ATC u.a. das proprietäre Konstrukt CTI-Protokoll CSTA over SIP genutzt werden, welches von SIP-basierten Plattformen interpretiert werden kann und bereits von mobilen UC-Clients verwendet wird.

Die vorliegende Erfindung beschäftigt sich mit der Aufgabe, wie Leistungsmerkmale ohne proprietäre Signalisierung in einer solchen Konfiguration bei vielen, wenn nicht sogar allen Herstellern genutzt werden könnten.

Diese Aufgabe wird erfindungsgemäß gelöst mit einem Verfahren gemäß Anspruch 1, einem Computerprogrammprodukt gemäß Anspruch 6 zur Implementierung des Verfahrens, einem maschinenlesbaren Datenträger gemäß Anspruch 7 mit darauf gespeichertem Computerprogrammprodukt sowie einem entsprechend ausgebildeten Porthandler gemäß Anspruch 8.

Vorteilhafte Weiterbildungen der Erfindung sind Gegenstand der abhängigen Ansprüche.

Erfindungsgemäß funktionieren in vorteilhafter Weise die betrachteten Leistungsmerkmale, ohne dass eine Leistungsmerkmalsignalisierung in SIP erfolgen muss. Während der Ausführung von Leistungsmerkmalen sollten aber mindestens zwei resultierende Verbindungen assoziiert werden. Dazu dient die Erfindung mit dem erfindungsgemäßen Porthandler, der mehrere SIP-T-Verbindungsendpunkte anhand der Teilnehmer-Nummer assoziiert und der SIP-basierten Vermittlung als einen (virtuellen) Benutzer darstellt. Dabei benutzt die Erfindung eine Eigenschaft heutiger WebRTC-Clients, zu einem Zeitpunkt nur in einer aktiven RTC-Session teilzunehmen. Das Verfahren kann aber auch bei mehreren gleichzeitigen Sessions funktionieren. Mit dem vorliegenden Verfahren können somit (z.B. über einen UTC integrierte) CKS-Clients einen erweiterten Zugriff auf die Anrufsteuerung (auch als Call Control bezeichnet) der angeschalteten TK-Plattform erhalten.

Die vorher genannten Konnektoren UTC und ATC benutzen zwei unterschiedliche Ansätze zur Anschaltung von CKS-Clients an eine TK-Plattform. Beim UTC werden die CKS-Clients über SIP-Leitung-Verfahren (Trunking) und beim ATC über SIP-Teilnehmer-Verfahren (Endpoint) integriert. Die Integration von WebRTC-Clients über SIP-Teilnehmer-Verfahren ermöglicht auf einfache Art und Weise eine erweiterte Anrufsteuerung und damit einen tieferen Zugriff auf die Leistungsmerkmale der angeschalteten TK-Plattform. Beispielsweise verwendet der WebRTC-Client zur Steuerung des zugeordneten Telefons CSTA over SIP. Bei CSTA handelt es sich um die Möglichkeit, Informationen der Anrufverarbeitung zwischen einer TK-Plattform und einer Applikation auszutauschen, und die Applikation wird in die Lage versetzt auf die Anrufverarbeitung der TK-Plattform einzuwirken.

Die für die Ausführung von Leistungsmerkmalen erforderliche Signalisierung (z.B. Rückfrage) wird bei Anwendung des erfindungsgemäßen Verfahrens über den am UTC registrierten CKS-Client mittels eines zweiten Ports (hier z.B. SIP-Trunk) in die Anrufverarbeitung (auch als Call Processing bezeichnet) geleitet. Voraussetzung hierfür ist die Implementierung einer "n zu 1"- Beziehung (auch mit "n:1"-Beziehung bezeichnet) in der Anrufverarbeitung. Hierzu wird der (virtuelle) Device-Handler durch einen universellen erfindungsgemäßen Porthandler abstrahiert.

Bei der "n zu 1"-Implementierung verweisen n Instanzen von Ports (hier SIP-Trunks) auf den einen Benutzer, welcher den CKS-Client im Call Processing repräsentiert. Der Benutzer kann innerhalb einer Anrufverarbeitung-Implementierung beispielsweise mittels einer funktionalen oder einer Stimulus-gesteuerten Signalisierung realisiert werden. Im Gegensatz zur funktionalen Signalisierung (beispielsweise gemäß SIP-Teilnehmer) besitzt im Wesentlichen die den Benutzer repräsentierende Instanz bei der Stimulus-Signalisierung (meist proprietär) keinen vermittlungstechnischen Zustand. Für das hier beschriebene Verfahren sind die Abbildung Stimulus-Signalisierung und Funktionale-Signalisierung in der Anrufverarbeitung-Implementierung unabhängig vom gewählten Ansatz.

Das hier beschriebene Verfahren nutzt hier z.B. lediglich native SIP-Trunking-Mittel und lässt sich auch durch sogenannte "3rd-pty-SIP-Server" anwenden und ist darüber hinaus auch fähig, völlig andere Protokolle an die Anrufsteuerung einer PBX anzuschließen (z.B. "Skinny von Cisco"), um eine erweiterte Anrufsteuerung für z.B. integrierte WebRTC-Clients und deren zugeordneten Telefonen durchzuführen.

Auf die verwendete Technik projiziert bedeutet dieses, dass der proprietäre WebRTC um CSTA angereicherte SIP-Teilnehmer-Tunnel des ATC durch einen nativen SIP Trunk des UTC bei gleichzeitiger Erhaltung der geplanten erweiterten Steuerung der Anrufverarbeitung vollständig ersetzt wird.

Hinsichtlich der Verwendung des Begriffes Integration ist zu bemerken, dass die Integration hier meist aus Sicht der TK-Plattform beschrieben ist, die die Möglichkeit zur Integration von z.B. WebRTC-Clients zur Verfügung stellt. Andersherum stellen Cloud-Kommunikationsserver wie "Unify Circuit" und "Skype for Business" Möglichkeiten zur Integration von TK-Plattformen zur Verfügung.

Weitere Vorteile, Merkmale und Besonderheiten der vorliegenden Erfindung ergeben sich aus der nachfolgenden Beschreibung vorteilhafter Ausführungsformen unter Bezugnahme auf die Zeichnung. Es zeigen schematisch:
- Fig. 1: eine Übersichtsanordnung einer Ausführungsform eines erfindungsgemäßen Porthandlers,
- Fig. 2: eine Übersichtsanordnung für die Darstellung einer "n zu 1"-Zuordnung für Leistungsmerkmale,
- Fig. 3: ein Ablaufdiagramm für die Darstellung einer "n zu 1"-Zuordnung für eine Rückfrage,
- Fig. 4: ein Verfahrensschema für im Porthandler ablaufende Schritte einer Kommunikation mit Rufrichtung von einem Client zu einem UTC,
- Fig. 5: ein Ablaufdiagramm für die Darstellung einer "n zu 1"-Zuordnung für ein Anklopfen,
- Fig. 6: ein Verfahrensschema für im Porthandler ablaufende Schritte einer Kommunikation mit Rufrichtung von einem UTC zu einem Client,
- Fig. 7: ein Ablaufdiagramm für die Darstellung einer "n zu 1"-Zuordnung für eine Rufweiterschaltung,
- Fig. 8: ein Ablaufdiagramm für die Darstellung einer "n zu 1"-Zuordnung für eine Anrufübernahme,
- Fig. 9: eine schematische Darstellung einer Vernetzung mittels der Nutzung von Porthandlern,
- Fig. 10: eine schematische Darstellung eines Porthandlers als Rufinstanz-basierte Einheit für einen ankommenden Ruf,
- Fig. 11: eine schematische Darstellung eines Porthandlers als Rufinstanz-basierte Einheit für das Auflegen bei einem ankommenden Ruf,
- Fig. 12: eine schematische Darstellung eines Porthandlers als Rufinstanz-basierte Einheit für einen abgehenden Ruf und
- Fig. 13: eine schematische Darstellung eines Porthandlers als Rufinstanz-basierte Einheit bei einem abgehenden Ruf.

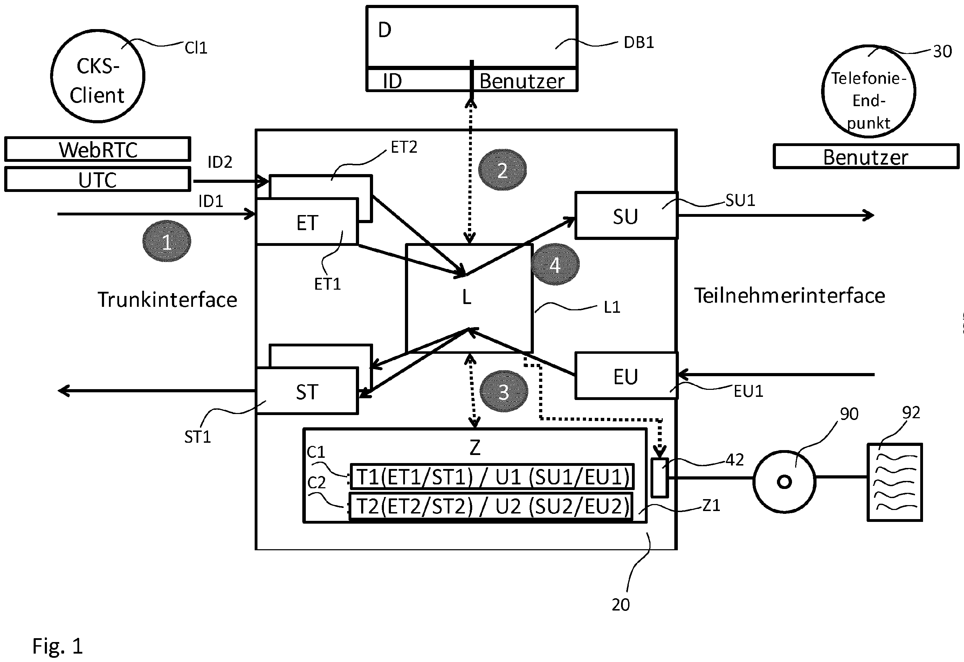

In Fig. 1 ist eine Ausführungsform eines erfindungsgemäßen Porthandlers 20 dargestellt, mit dem insbesondere das erfindungsgemäße Verfahren in der nachfolgend beschriebenen Weise ausgeführt wird.

Der Porthandler 20 umfasst eine (zentrale) Logikeinheit L1, mehrere Trunk-Empfangseinheiten ET1, ET2, mehrere Trunk-Sendeinheiten ST1, ST2, eine Benutzer-Sendeinheit SU1, eine Benutzer-Empfangseinheit EU1, und eine Zuordnungstabelle (Speichereinheit) Z1 für die Zuordnung der vorgenannten Komponenten relativ zueinander. Der Porthandler 20 steht in Verbindung mit einer Datenbank DB1 für die Speicherung von Identifikationen ID und Benutzern, einem CKS-Client Cl1 und einem dem Benutzer einer TK-Plattform zugeordneten Telefonie-Endpunkt 30.

Der Porthandler 20 enthält eine Steuervorrichtung 42, welche das der Erfindung zugrundeliegende Verfahren unter Verwendung eines schematisch dargestellten Computerprogramms 92 (gespeichert auf einer CD-ROM 90 als Beispiel für einen Datenträger) ausführt. Hierzu übergibt die Logikeinheit L1 des Porthandlers 20 einen ersten Ruf C1 über die einen ersten Trunk T1 repräsentierende erste Trunk-Empfangseinheit ET1 an die dem Benutzer U1 zugeordnete erste Sendeeinheit SU1. Die Logikeinheit L1 ordnet durch Verarbeitung einer über die erste Trunk-Empfangseinheit ET1 empfangenen ersten Identifikation ID1 die erste Trunk-Empfangseinheit ET1 und den ersten Ruf C1 dem Benutzer U1 mit Hilfe der (geeignet strukturierten) Datenbasis DB1 und der Zuordnungstabelle Z1 zu. Die Logikeinheit L1 übergibt dann über die zumindest einen zweiten Trunk T2 repräsentierende zweite Trunk-Empfangseinheit ET2 zumindest einen zweiten Ruf C2 ebenfalls an die dem Benutzer U1 zugeordnete Sendeinheit SU1, und die Logikeinheit L1 ordnet durch Verarbeitung einer über die zweite Trunk-Empfangseinheit ET2 empfangenen zweiten Identifikation ID2 die zweite Trunk-Empfangseinheit ET2 und den zumindest zweiten Ruf C2 ebenfalls dem Benutzer U1 mit Hilfe der Datenbasis DB1 und der Zuordnungstabelle Z1 zu. Schließlich führen die dem Benutzer U1 zugeordnete vermittlungstechnische Sendeeinheit SU1 und die dem Benutzer U1 zugeordnete vermittlungstechnische Empfangseinheit EU1 mittels des Clients Cl4 eine Anrufsteuerung von dem ersten Ruf C1 und dem zumindest einen zweiten Ruf C2 für das den Benutzer U1 repräsentierenden Telefonie-Endpunkt 30 durch.

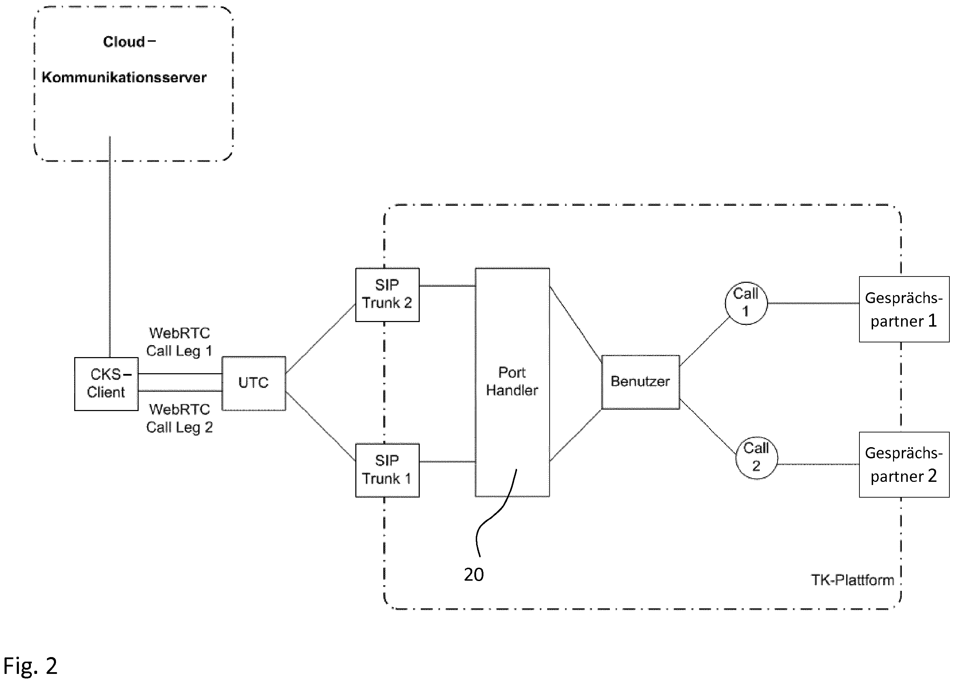

Fig. 2 stellt eine "n zu 1"-Zuordnung für Leistungsmerkmale dar. Die Anzahl der Telefonleitungen (Call Legs) zwischen dem Client und UTC ist durch die Implementierung und/oder den Möglichkeiten von WebRTC bestimmt und unabhängig von der Systemimplementierung. Damit ist es nicht erfindungswesentlich, ob ein CKS-Client n Verbindungen aufbaut oder n CKS-Clients je eine Verbindung zum UTC aufbauen. Der dem Benutzer einer TK-Plattform zugeordnete Endpunkt kann hierbei in den Betriebsarten "stimulus" oder "funktional" betrieben werden.

Dieses Vorgehen ermöglicht nun dem Benutzer mittels seines CKS-Clients, verschiedene Leistungsmerkmale über den letztendlich am UTC registrierten Endpunkt des Call Processings einer integrierenden TK-Plattform auszuführen.

Mittels des Porthandlers 20 wird die "normale" Benutzerinstanz im Call Processing (CP) adressiert. Damit brauchen die Kernkomponenten in CP über kein Wissen der benutzten SIP-Trunks zu verfügen, es wird somit eine Trunk-Schnittstelle in eine Benutzer-Schnittstelle gewandelt.

Die Gesprächspartner 1 und 2 können wiederum einen anderen CKS-Client repräsentieren.

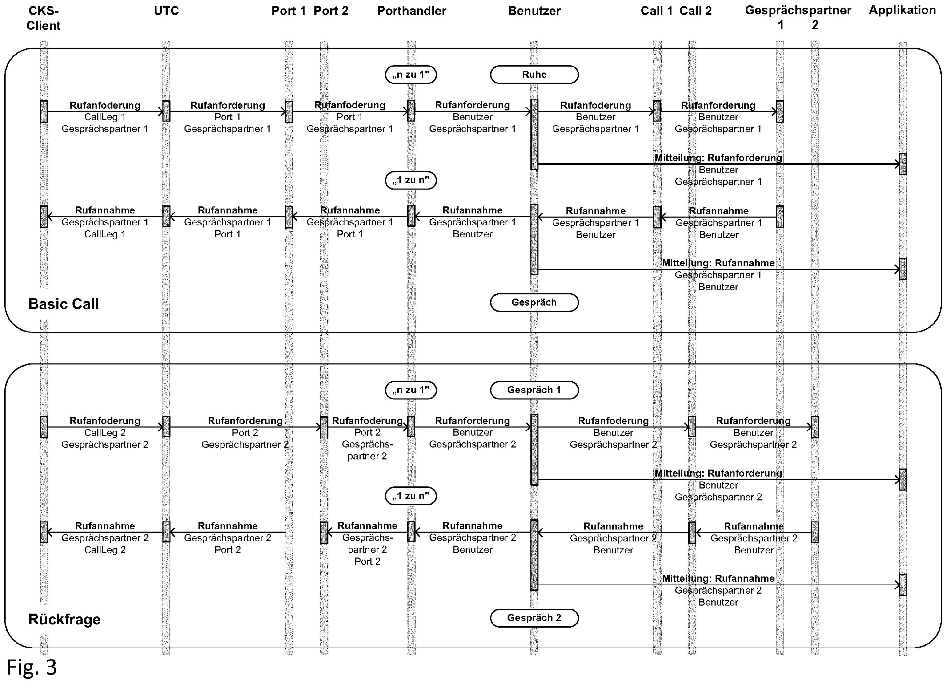

In Fig. 3 ist ein Beispiel für eine Ausführung des erfindungsgemäßen Verfahrens für die Rückfrage mit einer entsprechenden "n zu 1"-Zuordnung für eine Rückfrage dargestellt. Eine Rufanforderung Call 1 eines CKS-Clients - repräsentiert in der TK-Plattform durch einen Benutzer (Telefonie-Endpunkt) - wurde von einem Ziel bzw. Gesprächspartner 1 der TK-Plattform angenommen. Daraufhin leitet der CKS-Client eine Rückfrage über Call 2 zu einem Ziel bzw. Gesprächspartner 2 der TK-Plattform. Optional ermöglicht eine geeignete Implementierung im Call Processing, Mitteilungen über den Zustand der Anrufverarbeitung an eine beispielweise dem CKS-Client zugeordnete Applikation zu senden.

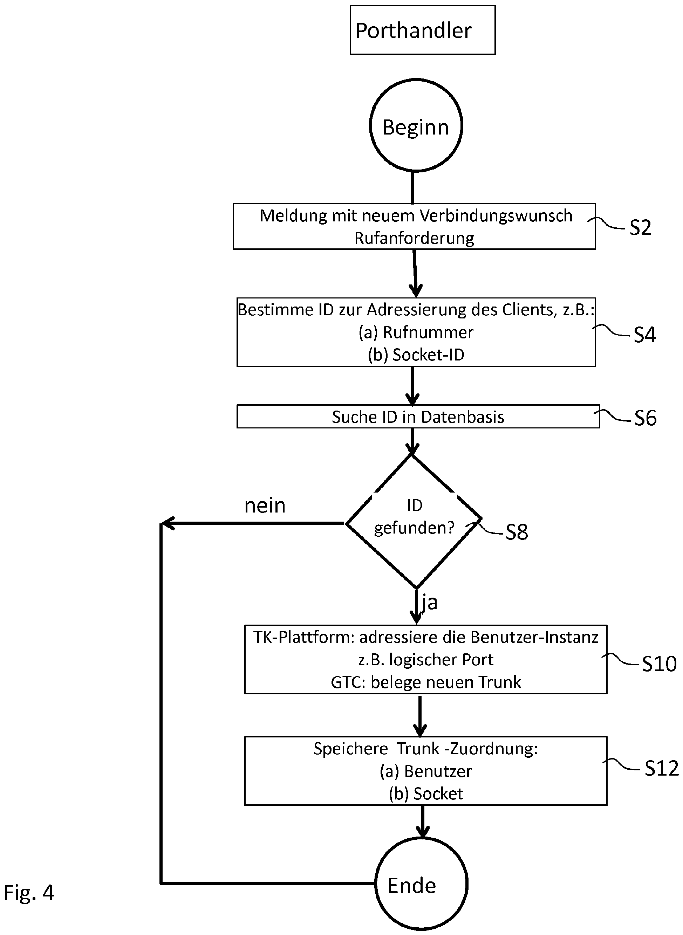

Die Aufgabe des Porthandlers 20 beim Rufen von CKS-Clients zur TK-Plattform ist es, die assoziierte Benutzer-Instanz (Telefonie-Endpunkt) bzw. den initiierenden CKS-Client zu bestimmen bzw. zu ermitteln. Konzeptbedingt kann der Porthandler 20 als Komponente der TK-Plattform (a) oder als Komponente des UTC (b) realisiert werden. Hierzu ist folgendes Verfahren gem. Fig. 4 vorgesehen: In Schritt S2 empfängt der Porthandler 20 eine Meldung zur Rufanforderung für eine erste Rufanforderung Call 1 gem. Fig. 3 und Fig. 1 mit einem neuen Verbindungswunsch, wonach in Schritt S4 eine ID (bzw. eine Identifikation) zur Adressierung des CKS-Clients bestimmt bzw. ermittelt wird. Bei der ID kann es sich beispielsweise für Konzept (a) um die dem CKS-Client in der TK-Plattform zugeordnete eigene Rufnummer und für Konzept (b) um die der TK-Plattform des CKS-Clients zugeordnete Socket-Verbindung handeln. Danach wird in Schritt S6 die ID in der Datenbasis DB1 gesucht. Falls nach Prüfung in Schritt S8 die ID nicht gefunden wird, ist das Verfahren beendet. Anderenfalls schickt der Porthandler 20 in Schritt S10 mittels der Logikeinheit gem. Fig.1 einen Befehl an die TK-Plattform, die Benutzer-Instanz zu adressieren (a), oder einen Befehl an den UTC, einen neuen Trunk zu belegen (b). Anschließend wird in Schritt S12 in der Zuordnungstabelle Z1 die Zuordnung zwischen Trunk und Benutzer (a) oder zwischen Socket und Trunk (b) abgespeichert, womit das Verfahren beendet ist.

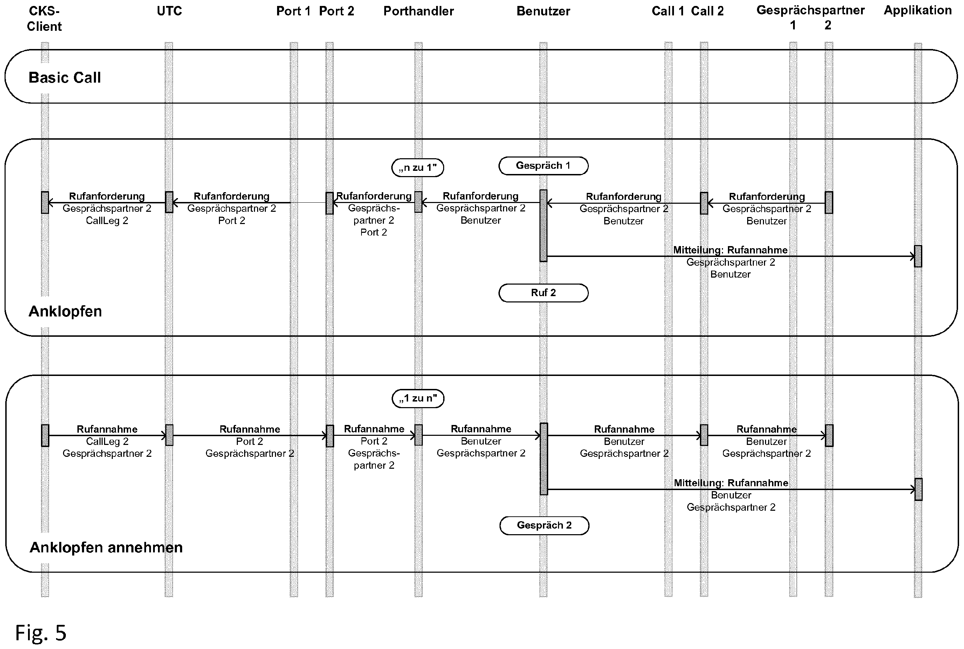

In Fig. 5 ist ein Beispiel für eine Ausführung des erfindungsgemäßen Verfahrens für das Anklopfen mit einer entsprechenden "n zu 1"-Zuordnung für das Anklopfen dargestellt. Eine Rufanforderung Call 1 eines CKS-Clients - repräsentiert in der TK-Plattform durch den Benutzer (Telefonie-Endpunkt) - wurde von einem Gesprächspartner 1 der PBX angenommen. Daraufhin ruft ein Gesprächspartner 2 der TK-Plattform bei dem CKS-Client an. Der Call 2 klopft somit beim Benutzer (Telefonie-Endpunkt) an, der CKS-Client nimmt das anklopfende Gespräch entgegen. Call 1 ist weiter aktiv und im Call Processing als belegt markiert. Optional ermöglicht eine geeignete Implementierung im Call Processing, Mitteilungen über den Zustand der Anrufverarbeitung an eine beispielweise dem CKS-Client zugeordnete Applikation zu senden.

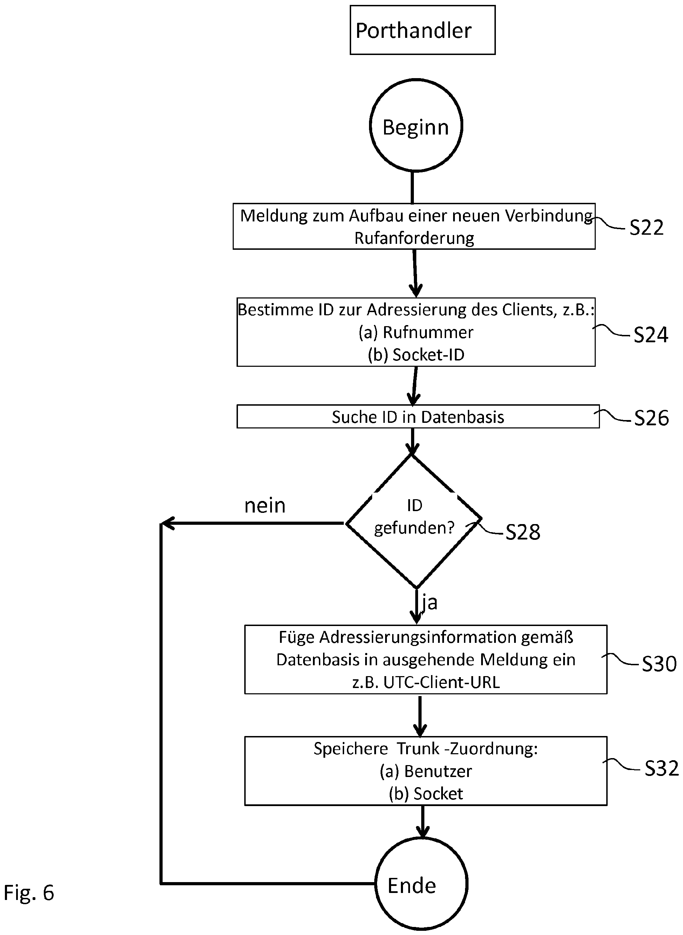

Die Aufgabe des Porthandlers 20 bei Rufen zur TK-Plattform ist es auch, die assoziierte Benutzer-Instanz bzw. die passenden Socket-Verbindung zu bestimmen und zu adressieren. Hierzu ist folgendes Verfahren gem. Fig. 6 vorgesehen: In Schritt S22 empfängt der Porthandler 20 eine Meldung zur Rufanforderung - dem Aufbau einer neuen Verbindung - wonach in Schritt S24 eine ID (bzw. ein Identifikation) zur Adressierung des CKS-Clients bestimmt bzw. ermittelt wird. Bei der ID kann es sich beispielsweise für Konzept (a) um die dem CKS-Client in der TK-Plattform zugeordnete eigene Rufnummer und für Konzept (b) um die der TK-Plattform des CKS-Clients zugeordnete Socket Verbindung handeln. Danach wird in Schritt S26 die ID in der Datenbasis DB1 gesucht. Falls nach Prüfung in Schritt S28 die ID nicht gefunden wird, ist das Verfahren beendet. Anderenfalls fügt der Porthandler 20 in Schritt S30 Adressierungsinformation gemäß Datenbasis DB1 in eine ausgehende Meldung zum CKS-Client ein. Bei der Adressierungsinformation kann es sich beispielsweise um die URL des CKS-Clients handeln. Anschließend wird in Schritt S32 in der Zuordnungstabelle Z1 die Zuordnung zwischen Benutzer und Trunk (a) oder zwischen Trunk und Socket (b) abgespeichert, womit das Verfahren beendet ist.

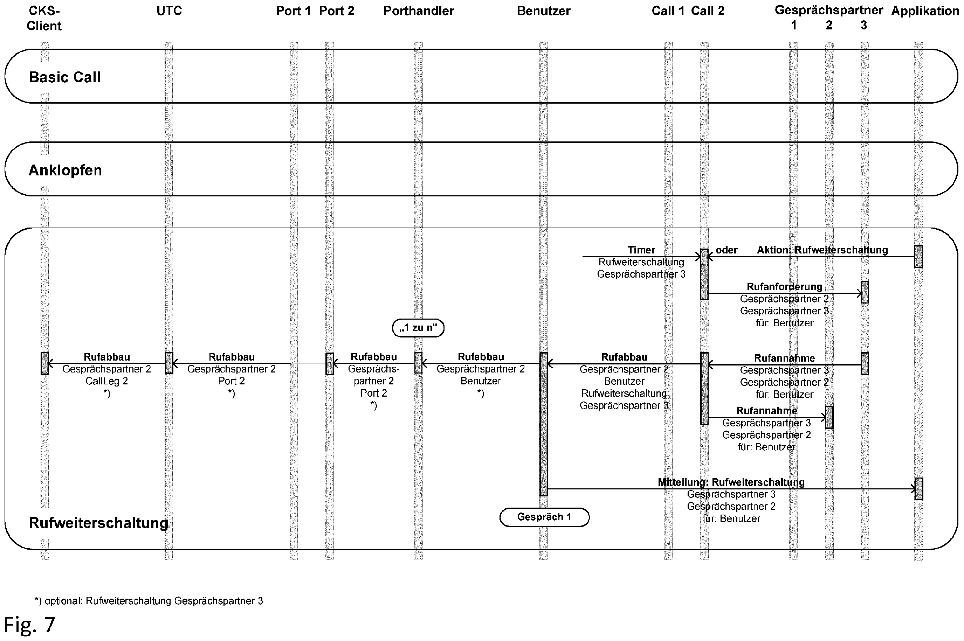

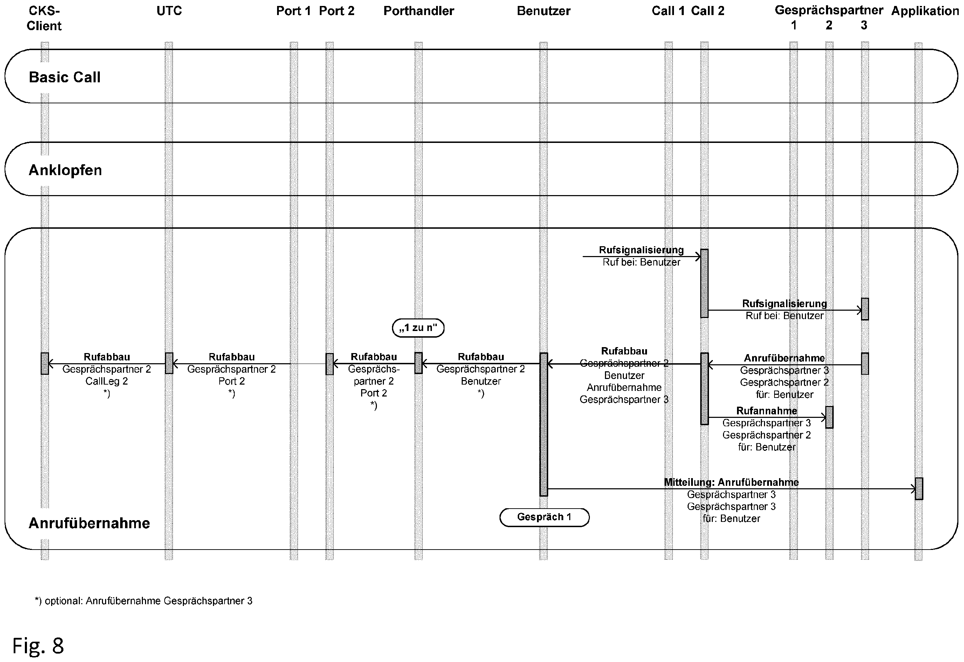

In Fig. 7 ist ein Beispiel für eine Ausführung des erfindungsgemäßen Verfahrens für die Rufweiterschaltung mit einer entsprechenden "n zu 1"-Zuordnung für Rufweiterschaltung und in Fig. 8 entsprechend für die Anrufübernahme dargestellt. Jeweils eine Rufanforderung Call 1 eines CKS-Clients - repräsentiert in der TK-Plattform durch den Benutzer (Telefonie-Endpunkt) - wurde von einem Gesprächspartner 2 der PBX angenommen und ist entsprechend im Call Processing als belegt markiert.

Im Falle der Rufweiterschaltung leitet das Call Processing aufgrund eines Timers, einer Aktion einer beispielweise dem CKS-Client zugeordneten Applikation oder eines anderen vergleichbaren Ereignisses den Call 2 an ein Ziel 3 bzw. einen Gesprächspartner 3 weiter. Nimmt der Gesprächspartner 3 den Ruf an, so wird der Call 2 zum CKS-Client abgebaut.

Im Falle der Anrufübernahme signalisiert das Call Processing oder eine Applikation den Call 2 bei einem Gesprächspartner 3. Übernimmt nun Gesprächspartner 3 den Anruf aufgrund einer Aktion am Endgerät, einer Aktion einer beispielweise dem Gesprächspartner 3 zugeordneten Applikation oder eines vergleichbaren anderen Ereignisses, so wird der Call 2 zum CKS-Client abgebaut.

Die in den vorherigen Figuren dargestellten Gesprächspartner 1, 2 und 3 können ebenfalls Repräsentanten je eines anderen CKS-Clients darstellen.

Während der Ausführung von erweiterten Anrufsteuerung-Leistungsmerkmalen kann die Steuerung der Payload in der Hoheit der CKS-Clients liegen. D.h. die Payload von Call 1 kann unabhängig zu Payload von Call 2 geschaltet werden. Andererseits ist die Payload Verwaltung auch in der TK-Plattform möglich.

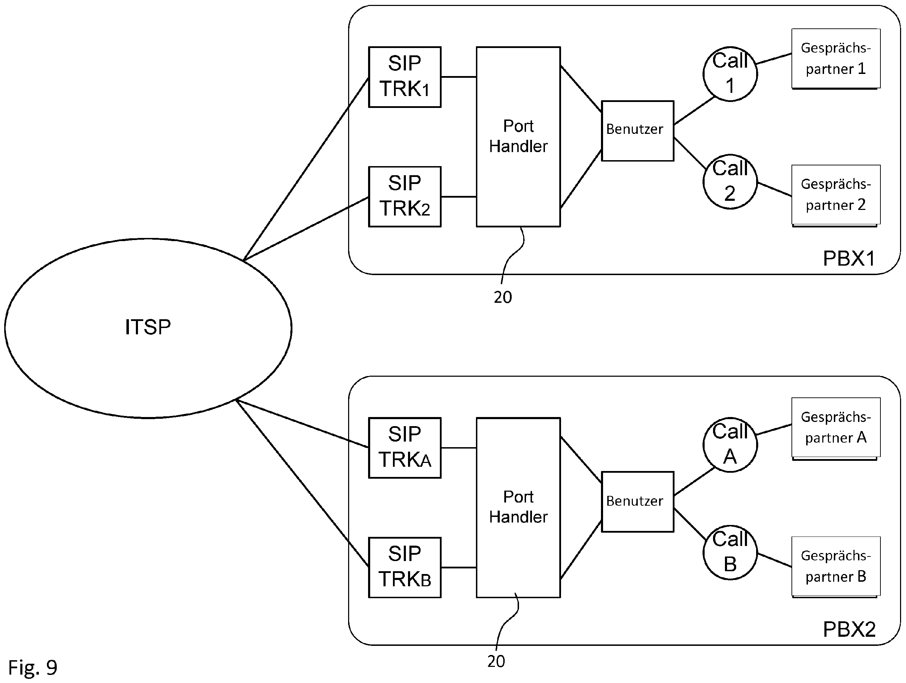

Das beschriebene Verfahren lässt sich auch bei der Vernetzung von TK-Plattformen über native SIP verwenden (wenn ggf. keine Vernetzung mittels SIP-Q möglich ist) und ermöglicht so z.B. auch die knotenübergreifende Presence-Steuerung bzw. auch die Nutzung von Gruppen-Leistungsmerkmalen. Diese Vernetzung via Porthandler-Nutzung ist in Fig. 9 dargestellt.

Ein Mitarbeiter arbeitet gemäß einem Anwendungsbeispiel abwechselnd an den Standorten PBX1 und PBX2. Wird für ihn jetzt eine Gruppe aus jeweils einem Teilnehmer in TK-Plattform PBX1 (Telefon und Benutzer) und TK-Plattform PBX2 (Telefon und Benutzer) eingerichtet, kann sichergestellt werden, dass die Statusführung (z.B. Besetztsignalisierung) in beiden TK-Plattformen bei allen anderen Benutzern jeweils korrekt geführt werden kann.

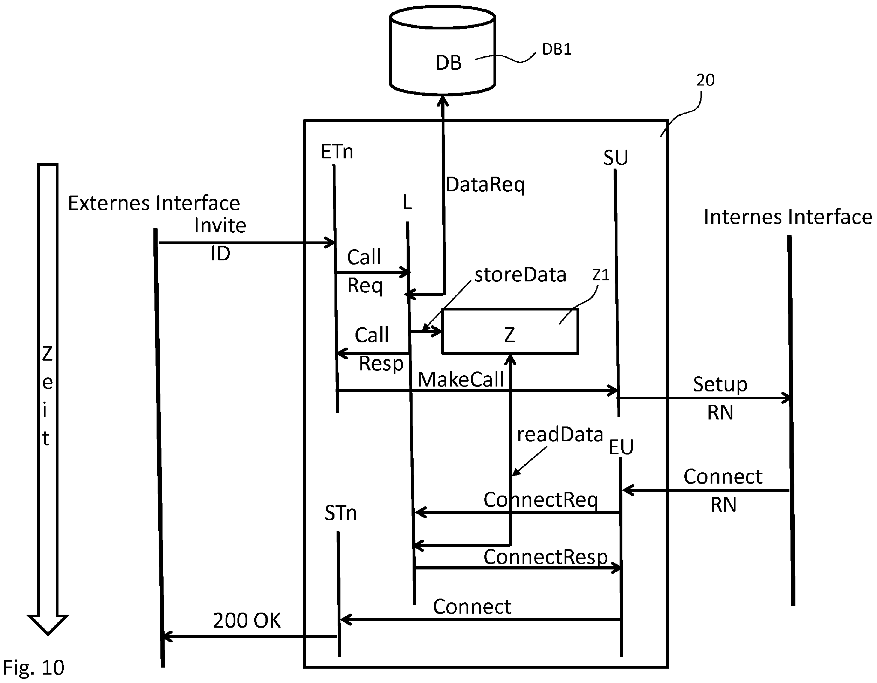

Fig. 10 zeigt beispielsweise die Ausführungsform eines Porthandlers 20 als Verbindungselement zwischen einem CKS-Client (externes Interface) und einer Anrufverarbeitungseinheit (internes Interface), hier für einen ankommenden Ruf (incoming Call). Hierbei ordnet der Porthandler 20 eine über eine Trunk-Empfangseinheit ET1 (vgl. z.B. Fig. 1) empfangene ID eines zumindest ersten ankommenden Rufs (incoming Call) eines SIP-Trunks (SIP: Invite) dem Benutzer mit Hilfe einer Logikeinheit L1 und geeignet strukturierten Datenbasis DB1 und Zuordnungstabelle Z1 zu. Nach erfolgreicher Zuordnung wird der incoming Call über das interne Interface der Sendeeinheit SU1 an die Anrufverarbeitungseinheit und somit an das den Benutzer bzw. dessen Rufnummer repräsentierende Telefon 30 weitergeleitet (TK-Plattform intern: MakeCall / Setup). Beantwortet der Benutzer den Anruf, so empfängt der Porthandler 20 über das interne Interface der Benutzer-Empfangseinheit EU1 eine Connect -Indikation, welche über die Trunk-Sendeeinheit ST1 an den Client weitergeleitet wird (SIP: OK). Eine Rückfrage gemäß Fig. 3 und Zuordnung zur der Sende- und Empfangseinheit des internen Interfaces erfolgt nun über die Instanzen der Empfangs- und Sendeeinheit des externen Interfaces.

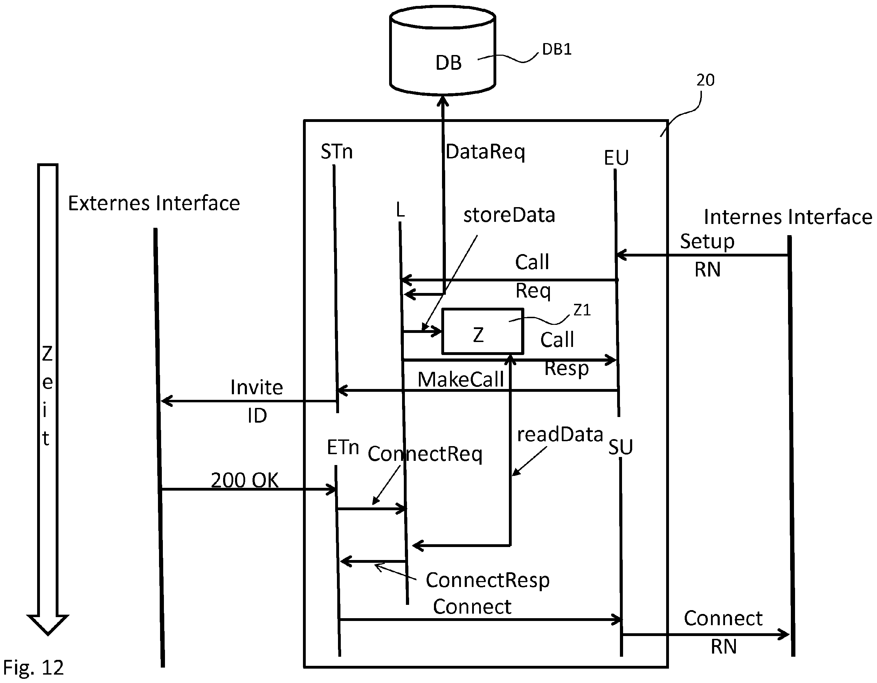

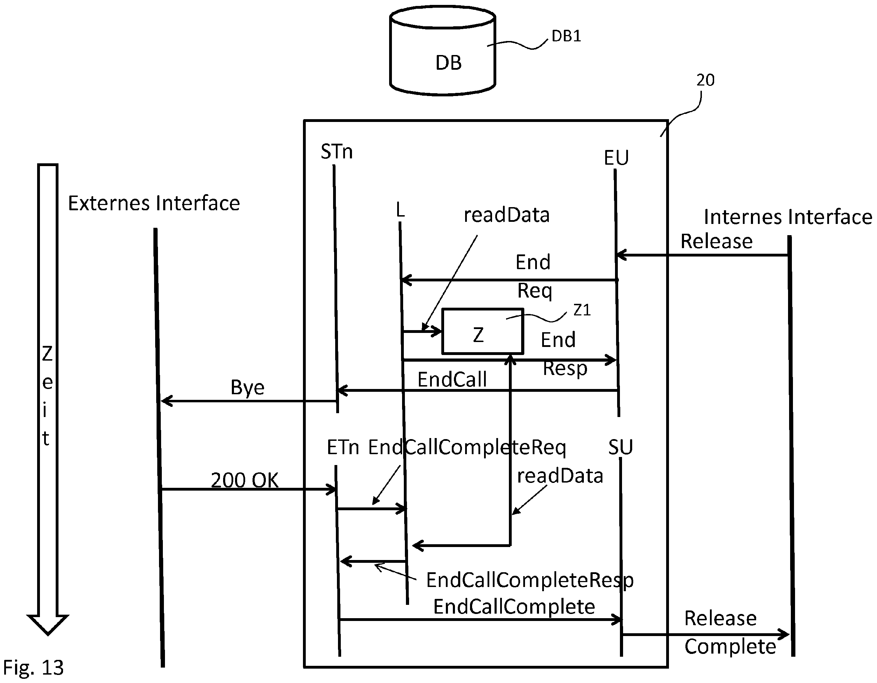

Gemäß den Fig. 10 bis 13 können jeweils mehrere Instanzen von Einheiten vorgesehen sein:
Instanz der Trunk-Empfangseinheit: ETn (n=1... N) entsprechend der Call-Instanz Cn (n=1...N)
Instanz der Trunk-Sendeeinheit: STn (n=1... N) entsprechend der Call-Instanz Cn (n=1...N)

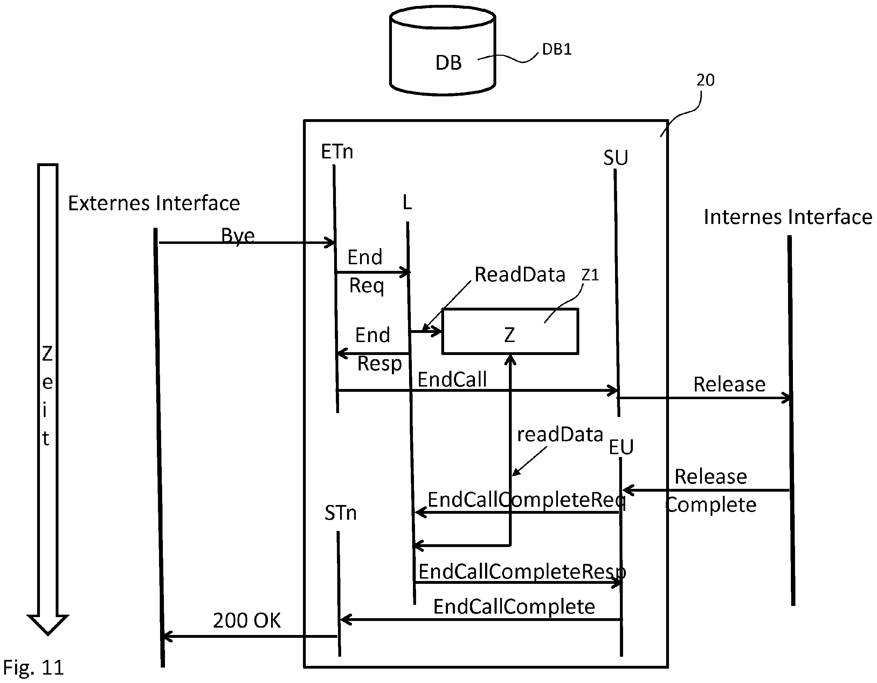

Ähnlich wie Fig. 10 zeigen die Fig. 11 bis 13 Ausführungsformen eines Porthandlers 20 als Verbindungselement zwischen einem Client (externes Interface) und einer Anrufverarbeitungseinheit (internes Interface), und zwar für das Auflegen bei einem ankommenden Ruf (incoming Release), für einen abgehenden Ruf (outgoing Call) bzw. bei einem abgehenden Ruf (outgoing Release).

Es versteht sich, dass bei der vorliegenden Erfindung ein Zusammenhang zwischen einerseits Merkmalen besteht, die im Zusammenhang mit Verfahrensschritten beschrieben wurden, sowie andererseits Merkmalen, die im Zusammenhang mit entsprechenden Vorrichtungen beschrieben wurden. Somit sind beschriebene Verfahrensmerkmale auch als zur Erfindung gehörige Vorrichtungsmerkmale - und umgekehrt - anzusehen, selbst wenn dies nicht explizit erwähnt wurde.

Es ist festzuhalten, dass die unter Bezug auf die dargestellten Ausführungsformen beschriebenen Merkmale der Erfindung, wie beispielsweise die Art und Ausgestaltung der einzelnen Komponenten der Telekommunikationsanordnung, einzelner Nachrichten, Signale und Parameter, auch bei anderen Ausführungsformen vorhanden sein können, außer wenn es anders angegeben ist oder sich aus technischen Gründen von selbst verbietet. Von derartigen, in Kombination beschriebenen, Merkmalen einzelner Ausführungsformen müssen außerdem nicht notwendigerweise immer alle Merkmale in einer betreffenden Ausführungsform realisiert sein.

### Bezugszeichenliste

- 20 =: Porthandler
- 30 =: Telefonie-Endpunkt
- 42 =: Steuereinrichtung
- 90 =: maschinenlesbarer Datenträger
- 92 =: Computerprogramm

- C1 =: Ruf 1/Call 1
- C2 =: Ruf 2/Call 2
- Cl1 =: Client
- DB1 =: Datenbasis
- ET1/2 =: Trunk-Empfangseinheit 1/2
- EU1/2 =: Empfangseinheit
- ID1/2 =: Identifikation1/2
- L1 =: Logikeinheit
- ST1/2 =: Trunk-Sendeeinheit 1/2
- SU1 =: Sendeeinheit
- T1/2 =: Trunk 1/2
- U1 =: Benutzer
- Z1 =: Zuordnungstabelle

## Patentansprüche

1. Computerimplementiertes Verfahren zum Ausführen einer Anrufsteuerung eines Clients (Cl1) auf einen einen Benutzer (U1) repräsentierenden Telefonie-Endpunkt (30), umfassend folgende Schritte:
- eine Logikeinheit (L1) eines Porthandlers (20) übergibt einen ersten Ruf (C1) über eine einen ersten Trunk (T1) repräsentierende erste Trunk-Empfangseinheit (ET1) an eine dem Benutzer (U1) zugeordnete erste Sendeeinheit (SU1),
- die Logikeinheit (L1) ordnet durch Verarbeitung einer über die erste Trunk-Empfangseinheit (ET1) empfangenen ersten Identifikation (ID1) die erste Trunk-Empfangseinheit (ET1) und den ersten Ruf (C1) dem Benutzer (U1) mit Hilfe einer geeignet strukturierten Datenbasis (DB1) und Zuordnungstabelle (Z1) zu,
- die Logikeinheit (L1) übergibt über eine zumindest einen zweiten Trunk (T2) repräsentierende zweite Trunk-Empfangseinheit (ET2) zumindest einen zweiten Ruf (C2) ebenfalls an die dem Benutzer (U1) zugeordnete Sendeinheit (SU1),
- die Logikeinheit (L1) ordnet durch Verarbeitung einer über die zweite Trunk-Empfangseinheit (ET2) empfangenen zweiten Identifikation (ID2) die zweite Trunk-Empfangseinheit (ET2) und den zumindest zweiten Ruf (C2) ebenfalls dem Benutzer (U1) mit Hilfe der Datenbasis (DB1) und Zuordnungstabelle (Z1) zu, und
- die dem Benutzer (U1) zugeordnete vermittlungstechnische Sendeeinheit (SU1) und eine dem Benutzer (U1) zugeordnete vermittlungstechnische Empfangseinheit (EU1) führen mittels des Clients (Cl1) eine Anrufsteuerung von dem ersten Ruf (C1) und dem zumindest einen zweiten Ruf (C2) für den den Benutzer (U1) repräsentierenden Telefonie-Endpunkt (30) durch.

2. Verfahren nach Anspruch 1,
**dadurch gekennzeichnet, dass** der Porthandler (20) vom Client (Cl1) eine Anforderung für einen zweiten Ruf (C2) annimmt und an einen zweiten Benutzer (U2) richtet, um eine Rückfrage an den zweiten Benutzer (U2) durchzuführen.

3. Verfahren nach Anspruch 1,
**dadurch gekennzeichnet, dass** der Porthandler (20) von einem zweiten Benutzer (U2) eine Anforderung für einen zweiten Ruf (C2) annimmt und an den Client (Cl1) richtet, um ein Anklopfen beim ersten Benutzer (U1) durchzuführen.

4. Verfahren nach Anspruch 1,
**dadurch gekennzeichnet, dass** der zweite Ruf (C2) bei einem dritten Ziel signalisiert und somit von einem zweiten Ziel an ein drittes Ziel weitergeschaltet oder vom dritten Ziel mittels Rufübernahme übernommen wird.

5. Verfahren nach einem der vorhergehenden Ansprüche,
**dadurch gekennzeichnet, dass** jeweils aus einem Porthandler (20) und einem Benutzer (U1, U2) in einer Telekommunikationsplattform (PBX1, PBX2) eine Gruppe eingerichtet wird und die Telekommunikationsplattformen (PBX1, PBX2) miteinander vernetzt werden, um eine Statusführung und/oder Besetztsignalisierung in beiden Telekommunikationsplattformen (PBX1, PBX2) bei allen anderen Benutzern zu erzielen.

6. Computerprogrammprodukt (92) zur Durchführung des Verfahrens gemäß einem der vorhergehenden Ansprüche.

7. Maschinenlesbarer Datenträger (90) mit darauf gespeichertem Computerprogrammprodukt (92) gemäß Anspruch 6.

8. Porthandler (20) zum Ausführen einer Anrufsteuerung eines Clients (Cl1) auf einen einen Benutzer (U1) repräsentierenden Telefonie-Endpunkt (30), umfassend:
- eine Logikeinheit (L1),
- eine einen ersten Trunk (T1) repräsentierende erste Trunk-Empfangseinheit (ET1),
- eine zumindest einen zweiten Trunk (T2) repräsentierende zweite Trunk-Empfangseinheit (ET2),
- eine dem Benutzer (U1) zugeordnete vermittlungstechnische Sendeeinheit (SU1), und
- eine dem Benutzer (U1) zugeordnete vermittlungstechnische Empfangseinheit (EU1), wobei die Logikeinheit (L1) für die Durchführung des Verfahrens gemäß einem der Ansprüche 1 bis 5 ausgestaltet und eingerichtet ist.

9. Porthandler (20) nach Anspruch 8,
**dadurch gekennzeichnet, dass** er eine Zuordnungstabelle (Z1), sowie vorzugsweise eine geeignet strukturierten Datenbasis (DB1), für die Zuordnung einer ersten Trunk-Empfangseinheit (ET1) und eines ersten Rufs (C1) zu dem Benutzer (U1) umfasst.

10. Porthandler (20) nach Anspruch 8 oder 9,
**dadurch gekennzeichnet, dass** der Porthandler (20) als Verbindungselement zwischen einem als externes Interface ausgebildeten Client (Cl1) und einer als internes Interface ausgebildeten Anrufverarbeitungseinheit ausgebildet ist.

## Claims

1. A computer-implemented method for executing a call control for a client (Cl1) on a telephony endpoint (30) representing a user (U1), said method comprising the following steps:
- a logic unit (L1) of a port handler (20) transmits a first call (C1) via a first trunk receiving unit (ET1) representing a first trunk (T1) to a first sending unit (SU1) assigned to the user (U1),
- the logic unit (L1) assigns the first trunk receiving unit (ET1) and the first call (C1) to the user (U1), by processing a first identification (ID1) received via the first trunk receiving unit (ET1), using a suitably structured database (DB1) and an assignment table (Z1),
- the logic unit (L1) transmits at least one second call (C2) via a second trunk receiving unit (ET2) representing at least one second trunk (T2), likewise to the sending unit (SU1) assigned to the user (U1),
- the logic unit (L1) assigns the second trunk receiving unit (ET2) and the at least second call (C2) likewise to the user (U1), by processing a second identification (ID2) received via the second trunk receiving unit (ET2), using the database (DB1) and the assignment table (Z1), and
- the switching-capable sending unit (SU1) assigned to the user (U1) and a switching-capable receiving unit (EU1) assigned to the user (U1) use the client (Cl1) to carry out a call control of the first call (C1) and the at least one second call (C2) for the telephony endpoint (30) representing the user (U1).

2. The method according to claim 1,
**characterized in that** the port handler (20) accepts a request from the client (Cl1) for a second call (C2) and directs it to a second user (U2), to query the second user (U2).

3. The method according to claim 1,
**characterized in that** the port handler (20) accepts a request for a second call (C2) from a second user (U2) and directs it to the client (Cl1), to place it in call waiting status for the first user (U1).

4. The method according to claim 1,
**characterized in that** the second call (C2) is signaled at a third target and is thus forwarded from a second target to a third target or is accepted by the third target by call pickup.

5. The method according to any one of the preceding claims, **characterized in that** a respective group comprising a port handler (20) and a user (U1, U2) in a telecommunication platform (PBX1, PBX2) is set up, and the telecommunication platforms (PBX1, PBX2) are networked with one another in order for a status indication and/or a busy signal to reach all other users in both telecommunication platforms (PBX1, PBX2).

6. A computer program product (92) for carrying out the method according to any one of the preceding claims.

7. A machine-readable data carrier (90) storing a computer program product (92) according to claim 6.

8. A port handler (20) for executing a call control for a client (Cl1) on a telephony endpoint (30) representing a user (U1), comprising:
- a logic unit (L1),
- a first trunk receiving unit (ET1) representing a first trunk (T1),
- a second trunk receiving unit (ET2) representing at least one second trunk (T2),
- a switching-capable sending unit (SU1) assigned to the user (U1), and
- a switching-capable receiving unit (EU1) assigned to the user (U1), wherein the logic unit (L1) is equipped and configured for carrying out the method according to any one of claims 1 to 5.

9. The port handler (20) according to claim 8, **characterized in that** it comprises an assignment table (Z1), preferably along with a suitably structured database (DB1) for assigning a first trunk receiving unit (ET1) and a first call (C1) to the user (U1).

10. The port handler (20) according to claim 8 or 9, **characterized in that** the port handler (20) is configured as a connection element between a client (Cl1) configured as an external interface and a call processing unit configured as an internal interface.

## Revendications

1. Procédé implémenté par ordinateur pour effectuer une commande d'appel d'un client (Cl1) à un terminal de téléphonie (30) représentant un utilisateur (U1), comprenant les étapes suivantes :
- une unité logique (L1) d'un gestionnaire d'accès (20) transmet un premier appel (C1) par le biais d'une première unité de réception de trunk (ET1) représentant un premier trunk (T1) à une première unité d'émission (SU1) associée à l'utilisateur (U1),
- l'unité logique (L1) associe par traitement d'une première identification (ID1) reçue par le biais de la première unité de réception de trunk (ET1) la première unité de réception de trunk (ET1) et le premier appel (C1) à l'utilisateur (U1) à l'aide d'une base de données (DB1) structurée de manière adaptée et d'un tableau d'association (Z1),
- l'unité logique (L1) transmet au moins un deuxième appel (C2) également à l'unité d'émission (SU1) associée à l'utilisateur (U1) par le biais d'une deuxième unité de réception de trunk (ET2) représentant au moins un deuxième trunk (T2),
- l'unité logique (L1) associe par traitement d'une deuxième identification (ID2) reçue par le biais de la deuxième unité de réception de trunk (ET2) la deuxième unité de réception de trunk (ET2) et l'au moins un deuxième appel (C2) également à l'utilisateur (U1) à l'aide de la base de données (DB1) et du tableau d'association (Z1), et
- l'unité d'émission (SU1) de communication associée à l'utilisateur (U1) et une unité de réception (EU1) de communication associée à l'utilisateur (U1) réalisent au moyen du client (Cl1) une commande d'appel du premier appel (C1) et de l'au moins un deuxième appel (C2) pour le terminal de téléphonie (30) représentant l'utilisateur (U1).

2. Procédé selon la revendication 1,
**caractérisé en ce que** le gestionnaire d'accès (20) du client (Cl1) accepte une demande pour un deuxième appel (C2) et l'adresse à un deuxième utilisateur (U2) afin de réaliser un rappel au deuxième utilisateur (U2).

3. Procédé selon la revendication 1,
**caractérisé en ce que** le gestionnaire d'accès (20) d'un deuxième utilisateur (U2) accepte une demande pour un deuxième appel (C2) et l'adresse au client (Cl1) afin de réaliser un appel en attente chez le premier utilisateur (U1).

4. Procédé selon la revendication 1,
**caractérisé en ce que** le deuxième appel (C2) est signalé dans le cas d'une troisième destination et ainsi est transféré d'une deuxième destination à une troisième destination ou est pris en charge par la troisième destination au moyen de l'interception d'appel.

5. Procédé selon l'une quelconque des revendications précédentes,
**caractérisé en ce qu'**un groupe est créé respectivement à partir d'un gestionnaire d'accès (20) et d'un utilisateur (U1, U2) dans une plateforme de télécommunication (PBX1, PBX2) et les plateformes de télécommunication (PBX1, PBX2) sont interconnectées afin d'obtenir un suivi de statut et/ou une signalisation occupé dans les deux plateformes de télécommunication (PBX1, PBX2) chez tous les autres utilisateurs.

6. Produit de programme informatique (92) pour la réalisation du procédé selon l'une quelconque des revendications précédentes.

7. Support de données lisible par machine (90) avec le produit de programme informatique (92) enregistré dessus selon la revendication 6.

8. Gestionnaire d'accès (20) pour effectuer une commande d'appel d'un client (Cl1) à un terminal de téléphonie (30) représentant un utilisateur (U1), comprenant :
- une unité logique (L1),
- une première unité de réception de trunk (ET1) représentant un premier trunk (T1),
- une deuxième unité de réception de trunk (ET2) représentant au moins un deuxième trunk (T2)
- une unité d'émission (SU1) de communication associée à l'utilisateur (U1), et
- une unité de réception (EU1) de communication associée à l'utilisateur (U1), dans lequel l'unité logique (L1) est configurée et aménagée pour la réalisation du procédé selon l'une quelconque des revendications 1 à 5.

9. Gestionnaire d'accès (20) selon la revendication 8, **caractérisé en ce qu'**il comprend un tableau d'association (Z1), ainsi que de préférence une base de données (DB1) structurée de manière adaptée, pour l'association d'une première unité de réception de trunk (ET1) et d'un premier appel (C1) à l'utilisateur (U1).

10. Gestionnaire d'accès (20) selon la revendication 8 ou 9, **caractérisé en ce que** le gestionnaire d'accès (20) est réalisé en tant qu'élément de liaison entre un client (Cl1) réalisé en tant qu'interface externe et une unité de traitement d'appel réalisée en tant qu'interface interne.
